# FASCICULE DE BREVET EUROPEEN

(11) **EP 2 904 062 B1**
(45) Date de publication et mention de la délivrance du brevet: **19.12.2018**
(21) Numéro de dépôt: 13782798.6
(22) Date de dépôt: 04.10.2013
(51) Int. Cl.: C09J 177/06, C08L 77/06, B32B 27/34, B32B 1/08

(54) **COMPOSITION ET PROCEDE D'ADHESION SANS SOLVANT SUR ELASTOMERE A BASE D'ACRYLONITRILE**
ZUSAMMENSETZUNG UND VERFAHREN FÜR LÖSUNGSMITTELFREIE HAFTUNG AUF EINEM ELASTOMER AUS ACRYLNITRIL
COMPOSITION AND PROCESS FOR SOLVENT-FREE ADHESION ON AN ACRYLONITRILE-BASED ELASTOMER

(30) Priorité: 04.10.2012 FR 1259447
(43) Date de publication de la demande: 12.08.2015
(73) Titulaire: Arkema France, 92700 Colombes (FR)
(72) Inventeur: PINEAU, Quentin, F-27000 Evreux (FR); D'HERBECOURT, Bruno, F-27300 Bernay (FR); BUSSI, Philippe, F-78000 Versailles (FR)
(86) Numéro de dépôt international: PCT/FR2013/052362
(87) Numéro de publication internationale: WO 2014/053786

(56) Documents cités:
- EP-A1- 1 270 211
- EP-A1- 1 314 759

## Description

### DOMAINE DE L'INVENTION

La présente invention concerne une nouvelle composition sans solvant capable d'adhérer efficacement sur élastomère à base d'acrylonitrile, caoutchouc spécial. La présente invention concerne également un procédé sans solvant utilisant une telle composition pour assembler un premier substrat S1 élastomère à base d'acrylonitrile et un second substrat S2 (identique ou différent de S1), de façon à obtenir un stratifié S1-S2. La présente invention concerne aussi l'utilisation de cette composition, de ce procédé ou de tels stratifiés S1-S2 dans tout type d'industrie susceptible d'utiliser du caoutchouc.

### ARRIERE-PLAN TECHNIQUE

Les élastomères à base d'acrylonitrile, tels que les copolymères butadiène-acrylonitrile, aussi appelés « caoutchoucs nitrile », abrégés « NBR » pour nitrile butadiene rubber en anglais, sont un type d'élastomère à usages spéciaux, ou caoutchouc spécial.

Les NBR sont synthétisés par copolymérisation radicalaire en émulsion du butadiène avec l'acrylonitrile (noté ci-après AN). Le taux d'acrylonitrile, variable selon les propriétés recherchées, se situe généralement entre 15 et 51 %. On qualifie ceux qui contiennent 33% d'AN de grades à taux moyen, et ceux qui en contiennent plus de 41% de grades à haut taux. Les NBR sont connus pour leur résistance et longévité, quelles que soient les propriétés physicochimiques considérées. Ils présentent une excellente résistance chimique notamment aux huiles, graisses minérales et aux carburants, une bonne résistance au vieillissement, à l'usure et à l'abrasion, une faible perméabilité aux gaz, une bonne résistance à la fatigue dynamique, et de bonnes propriétés à froid. La teneur en AN du NBR détermine les propriétés du NBR. Plus le taux d'AN augmente, plus la résistance aux solvants, aux carburants, à l'abrasion, et à la perméation de gaz augmente, et sa mise en oeuvre est facile. Plus le taux d'AN diminue, et meilleures sont sa résilience et ses propriétés à froid.

Les NBR sont notamment utilisés pour le gainage de câbles mono ou multi-couche(s), comme joints divers, tuyaux, gants médicaux et pour l'industrie chimique (nonlatex, modèles fins jetables, ou épais plus protecteurs), couches de surface de blanchets en impression offset, courroies de transmission automobile, trapézoïdales, cuir synthétique, et des chaussures de sport ou de sécurité.

La plupart de ces utilisations nécessitent l'adhésion du NBR à d'autres matériaux, la création interfaces adhérant avec d'autres matériaux, ou encore l'adhérence avec des renforts par exemple de matériaux composites. Or, Il s'avère que le NBR est difficile à coller avec les méthodes de collage existantes, et ce d'autant plus que sa teneur en AN est haute.

Les méthodes de collage actuelles sur NBR reposent sur l'utilisation de colles à base de solvants, ou bien sur le prétraitement de la surface du NBR, par exemple selon un procédé consistant à dissoudre la surface de caoutchoucs, avec un solvant pour coller les surfaces entre elles. En outre, ces méthodes de collage nécessitent des conditions particulières de pression et/ou de température pour évaporer le solvant et/ou permettre le durcissement du joint de colle. En général, le collage sur NBR est réalisé au moyen d'une colle phénolique thermodurcissable aqueuse comprenant au moins un élastomère diénique. Dans l'industrie des pneumatiques notamment, on utilise le plus souvent une colle connue sous le nom de colle « RFL » initiales de résorcinol formaldéhyde latex. Cette colle RFL est essentiellement constituée, d'une part d'une résine phénolique thermodurcissable aqueuse et d'autre part d'une matrice élastomère. Plus précisément, cette résine phénolique thermodurcissable comprend, en phase aqueuse, du résorcinol (ou un précondensat résorcinol/formol), du formol et de la soude. Quant à ladite matrice élastomère, elle est constituée d'un ou de plusieurs élastomères diéniques, tels que du caoutchouc naturel éventuellement coupé avec un copolymère de styrène et de butadiène, et/ou un terpolymère de vinylpyridine, de styrène et de butadiène. On ajoute également de l'ammoniac ou de la soude pour l'obtention de ladite colle.

La substance de base des colles RFL est le formaldéhyde (ou formol) qu'il est souhaitable de supprimer à terme des compositions de collage, en raison de l'évolution récente de la réglementation européenne sur ce type de produit. Dans certains cas, cette colle peut en outre contenir des isocyanates bloqués.

D'autres techniques connues incluent des traitements chimiques, tels que par exemple l'attaque des substrats à encoller à l'aide de solutions acides ou basiques, ou bien à l'aide de solvants spéciaux et spécifiques aux matériaux. A titre d'exemple, le Méta crésol est utilisé comme solvant. Toutefois, ces solutions acides ou basiques ou ces solvants sont difficilement manipulables à cause de leur toxicité, de leur écotoxicité et/ou de leur caractère corrosif. Leur emploi est donc souvent limité et demande des équipements appropriés de protection, d'application, et de traitement des rejets. Plusieurs étapes complémentaires sont souvent nécessaires, comme la neutralisation des traitements chimiques, le rinçage et le séchage. Ces étapes sont à l'origine de rejets, générateurs de pollutions. Ces étapes additionnelles du procédé d'assemblage sont consommatrices d'énergie et réduisent la productivité, notamment lorsque l'assemblage est effectué en procédé continu sur lignes industrielles.

La demande de brevet EP 1 314 759 A1 décrit des tubes multicouches utiles pour le transport de fluide d'air conditionné, comprenant dans leur direction radiale de l'extérieur vers l'intérieur une première couche d'élastomère vulcanisé formant la couche extérieure, une deuxième couche d'EVOK ou d'un mélange à base d'EVOH, une troisième couche d'un mélange de polyamide et de polyoléfine à matrice polyamide, et éventuellement une couche intérieure d'élastomère vulcanisé.

La demande EP 1 270 211 A1 décrit une structure comprenant une couche en polymère fluoré et un liant à base de pipérazine.

La présente invention a donc pour but de fournir une composition et un procédé efficaces sans solvant pour adhérer sur substrats élastomères à base d'acrylonitrile, tels que NBR, et qui ne modifient pas les propriétés mécaniques du substrat.

La demanderesse a maintenant trouvé une composition thermofusible ou composition thermoadhésive à base de polyamide, qui de façon inattendue, adhère d'autant mieux sur substrat élastomère à base d'acrylonitrile (AN), que le taux d'AN augmente dans le substrat. Cette nouvelle composition rend possible, pour la première fois, un procédé de collage efficace et sans solvant sur substrat élastomère à base d'AN, notamment sur substrat NBR. De plus, la composition et le procédé de l'invention n'altèrent pas mais bien au contraire améliorent certaines propriétés mécaniques de substrats ainsi collés.

Les colles ou adhésifs thermofusibles, aussi appelés indifféremment thermoadhésifs, compositions thermocollantes, également désignés par l'abréviation HMA (hot melt adhesives), sont des matériaux thermoplastiques solides à la température ambiante et qui par chauffage généralement au dessus de leur température de fusion, par exemple vers 180°C, deviennent des liquides plus ou moins visqueux. Ces liquides sont appliqués sur un premier substrat puis on accoste ce premier substrat avec une seconde surface. Par refroidissement, on obtient une adhérence entre le substrat et la deuxième surface. Le temps ouvert est la période pendant laquelle la colle qui a été appliquée sur un substrat qui est à la température ambiante reste collante, c'est-à-dire l'intervalle de temps pendant lequel on peut appliquer la seconde surface et par refroidissement obtenir une adhérence entre le substrat et la seconde surface. Passé ce délai du temps ouvert on ne peut plus obtenir une adhérence suffisante entre le substrat et la seconde surface. Ces colles peuvent aussi être disposées à l'état solide entre les deux matériaux à coller puis on chauffe l'ensemble, la colle fond et par refroidissement les deux matériaux sont collés l'un sur l'autre. Cette technique est utilisée notamment dans l'industrie textile, la colle est sous forme de film ou de poudre que l'on dispose entre deux tissus, puis un fer chaud provoque le collage des tissus.

Les polyamides classiquement utilisés comme thermoadhésifs dans le domaine textile (fixation des tissés et non-tissés), l'électronique (enrobage des fils de cuivre pour bobines) ou l'automobile sont appliqués aux températures supérieures à leurs points de fusion. La tenue thermique des thermoadhésifs est donc limitée à leur point de fusion, et souvent déjà à 10°C en dessous de leur point de fusion le produit devient mou et moins adhésif. C'est pourquoi, jusqu'à présent, ces polyamides thermoadhésifs n'avaient jamais été exploités dans l'industrie des caoutchoucs, et en particulier pour l'assemblage ou le collage impliquant des caoutchoucs nitrile. En effet les propriétés des substrats concernés par le collage diffèrent totalement des substrats élastomères à base d'AN, de type NBR, qui intéressent la présente invention. D'autre part, les problématiques rencontrées dans le collage de matériaux textiles, telles qu'une meilleure adhésion sur des surfaces traitées, des tenues thermiques plus élevées, ou une meilleure résistance du collage aux nettoyage à la vapeur ou aux solvants de nettoyage à sec, n'avaient jamais inciter à transposer ces techniques au collage sur caoutchouc nitrile qui requiert des performances de collage, notamment des forces de pelage bien supérieures, généralement supérieures à 10 N/cm, voire supérieures à 20 N/cm, ou 30 N/cm, selon la norme NF EN 1895..

La présente invention permet de surmonter les inconvénients de l'état de la technique. Elle fournit plus particulièrement un procédé d'adhésion sans solvant sur tout substrat élastomère à base d'acrylonitrile. Ceci est accompli grâce à la sélection d'une composition polyamide particulière comprenant des amides tertiaires.

Ce résultat est surprenant dans la mesure où, sans modifier la surface de l'élastomère à base d'acrylonitrile, on atteint des niveaux d'adhérence nettement supérieurs à ceux des techniques d'adhésion existantes.

Sans vouloir être liés par une théorie, les inventeurs estiment que la présence de groupements carbonyles combinée à une faible teneur en liaisons hydrogène de la composition polyamide selon l'invention assurent son excellente cohésion avec les substrats élastomères à base d'acrylonitrile, ainsi qu'avec les substrats polaires à fonctions -NH2 ou -OH.

### DESCRIPTION DE MODES DE REALISATION DE L'INVENTION

L'invention est maintenant décrite plus en détail et de façon non limitative dans la description qui suit.

La présente concerne en premier lieu une composition polyamide thermoadhésive sur élastomère à base d'acrylonitrile, caractérisée en ce qu'elle comprend de 10 à 100% molaire, de préférence de 50 à 100% molaire, de fonctions amides tertiaires, sur le nombre de mol total de fonctions amides de la composition.

De préférence, les fonctions amides tertiaires sont issues d'au moins un composé diamine et/ou aminoacide à fonction(s) amine(s) secondaire(s), aliphatique et/ou ou cycloaliphatique, comprenant de préférence au moins un groupement choisi parmi : pipérazine, pipéridine, pyrrolidine et/ou leurs dérivés.

De préférence ledit composé est choisi parmi : piperazine (Pip), aminoéthylpipérazine (AEP), acide N-heptyl-11-aminoundécanoïque, 1,3-di-(4-piperidyl)propane, 1,2-di-(4-piperidyl)ethane, leurs dérivés, et leurs mélanges.

Avantageusement, la composition selon l'invention comprend de 10 à 100% molaire, de préférence de 50 à 100% molaire, d'au moins un monomère choisi parmi : Pip.9, Pip.10, Pip.12, Pip.14, Pip.18, Pip.36, AEP.6, AEP.9, AEP.10, AEP.12, AEP.14, AEP.18, AEP.36, et leurs mélanges, sur le nombre de moles total de polyamide de la composition.

La composition de l'invention comprend de préférence un copolyamide choisi parmi : PA Pip.9/Pip.12/11, PA 6/Pip.12/12, PA 6.10/Pip.10/Pip.12, PA Pip.12/12, PA Pip.10/12, PA Pip.10/11/Pip.9, et leurs mélanges.

Selon un mode de réalisation de l'invention, la composition comprend en outre au moins l'un des monomères suivants : 4.6, 4.T, 5.4, 5.9, 5.10, 5.12, 5.13, 5.14, 5.16, 5.18, 5.36, 6, 6.4, 6.9, 6.10, 6.12, 6.13, 6.14, 6.16, 6.18, 6.36, 6 .T, 9, 10.4, 10.9, 10.10, 10.12, 10.13, 10.14, 10.16, 10.18, 10.36, 10.T, 11, 12, 12.4, 12.9, 12.10, 12.12, 12.13, 12.14, 12.16, 12.18, 12.36, 12.T, et leurs mélanges sous forme d'alliage ou de copolyamide.

Selon un mode de réalisation, la composition de l'invention forme un alliage avec un polyamide haute température et/ou avec un polyamide très haute température, comprenant un polyphtalamide, tel que le PA 11/10.T, PA 11/6.T, type Rilsan® HT. L'adhérence de tels polyamides haute température est ainsi améliorée sur substrats élastomères à base d'acrylonitrile.

Par polyamide (homopolyamide ou copolyamide) au sens de l'invention on entend les produits de condensation des lactames, des aminoacides et/ou des diacides avec les diamines et, en règle générale, tout polymère formé par des motifs ou monomères reliés entre eux par des groupes amides.

Le terme « monomère » dans la présente description des polyamides doit être pris au sens d' « unité répétitive ». Le cas où une unité répétitive du polyamide est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à polymériser. Dans le cas où les polyamides selon l'invention comprennent au moins deux monomères différents, appelés «co-monomères», c'est à dire au moins un monomère et au moins un co-monomère (monomère différent du premier monomère), ils comprennent un copolymère tel qu'un copolyamide abrégé COPA.

Par copolyamide (abrégé COPA), on entend les produits de polymérisation d'au moins deux monomères différents choisis parmi :
- les monomères de type aminoacides ou acides aminocarboxyliques, et de préférence les acides alpha,oméga-aminocarboxyliques;
- les monomères de type lactames ayant de 3 à 18 atomes de carbone sur le cycle principal et pouvant être substitués ;
- les monomères de type « diamine.diacide » issus de la réaction entre une diamine aliphatique ayant de 4 et 36 atomes de carbone, de préférence de 4 à 18 atomes de carbone et un diacide carboxylique ayant de 4 et 36 atomes de carbone, de préférence de 4 à 18 atomes de carbone ; et
- leurs mélanges, avec des monomères à nombre de carbone différent dans le cas de mélanges entre un monomère de type aminoacide et un monomère de type lactame.

### Monomères de type aminoacides :

A titre d'exemples d'alpha,oméga-aminoacides, on peut citer ceux ayant de 4 à 18 atomes de carbone, tels que les acides aminocaproïque, 7-aminoheptanoïque, 11-aminoundécanoïque, N-heptyl-11-aminoundécanoïque et 12-aminododécanoïque.

### Monomères de type lactames :

A titre d'exemples de lactames, on peut citer ceux ayant de 3 à 18 atomes de carbone sur le cycle principal et pouvant être substitués. On peut citer par exemple le β,β-diméthylpropriolactame, le α,α-diméthylpropriolactame, l'amylolactame, le caprolactame aussi appelé lactame 6, le capryllactame aussi appelé lactame 8, l'oenantholactame et le lauryllactame aussi appelé lactame 12.

### Monomères de type « diamine.diacide » :

A titre d'exemples d'acide dicarboxylique, on peut citer les acides ayant de 4 et 36 atomes de carbone de carbone. On peut citer par exemple, l'acide adipique, l'acide sébacique, l'acide azélaïque, l'acide subérique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98% et sont de préférence hydrogénés) et l'acide dodécanédioïque HOOC-(CH2)10-COOH, et l'acide tétradécanedioïque.

On entend plus particulièrement par dimères d'acides gras ou acides gras dimérisés, le produit de la réaction de dimérisation d'acides gras (contenant généralement 18 atomes de carbone, souvent un mélange d'acide oléique et/ou linoléique). Il s'agit de préférence d'un mélange comprenant de 0 à 15% de monoacides en C18, de 60 à 99% de diacides en C36, et de 0,2 à 35% de triacides ou polyacides en C54 ou plus.

A titre d'exemple de diamine, on peut citer les diamines aliphatiques ayant de 4 à 36 atomes, de préférence de 4 à 18 atomes, pouvant être aryliques et/ou cycliques saturées. A titre d'exemples on peut citer l'hexaméthylènediamine, la pipérazine (abrégée « Pip »), l'aminoethylenepiperazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPMD), la bis(aminocyclohéxyl) méthane (BACM), la bis(3-méthyl-4 aminocyclohéxyl) méthane (BMACM), la méthaxylyènediamine, et le bis-p aminocyclohexylméthane.

A titre d'exemples de monomères de type « diamine.diacide », on peut citer ceux résultant de la condensation de l'hexaméthylène diamine avec un diacide C6 à C36, notamment les monomères : 6.6, 6.10, 6.11, 6.12, 6.14, 6.18. On peut citer les monomères résultant de la condensation de la décanediamine avec un diacide C6 à C36, notamment les monomères : 10.10, 10.12, 10.14, 10.18.

A titre d'exemples de copolyamides formés à partir des différents types de monomères décrits ci-dessus, on peut citer les copolyamides résultant de la condensation d'au moins deux acides alpha,oméga-aminocarboxyliques ou de deux lactames ou d'un lactame et d'un acide alpha,oméga-aminocarboxylique. On peut encore citer les copolyamides résultant de la condensation d'au moins un acide alpha,oméga-aminocarboxylique (ou un lactame), au moins une diamine et au moins un acide dicarboxylique. On peut encore citer les copolyamides résultant de la condensation d'une diamine aliphatique avec un diacide carboxylique aliphatique et d'au moins un autre monomère choisi parmi les diamines aliphatiques différentes de la précédente et les diacides aliphatiques différents du précédent.

A titre d'exemples de copolyamides, on peut citer des copolymères de caprolactame et de lauryllactame (PA 6/12), des copolymères de caprolactame, d'hexaméthylène diamine et d'acide adipique (PA 6/6.6), des copolymères de caprolactame, de lauryllactame, d'hexaméthylène diamine et d'acide adipique (PA 6/12/6.6), des copolymères de caprolactame, d'hexaméthylène diamine et d'acide azélaïque, d'acide 11-aminoundécanoïque, et de lauryllactame, (PA 6/6.9/11/12), des copolymères de caprolactame, d'acide adipique et d'hexaméthylène diamine, d'acide 11-aminoundécanoïque, de lauryllactame (PA 6/6.6/11/12), des copolymères d'hexaméthylène diamine, d'acide azélaïque, et de lauryllactame (PA 6.9/12), des copolymères de caprolactame et d'acide 11-aminoundécanoïque (PA 6/11), des copolymères de lauryllactame et de capryllactame (PA 12/8), des copolymères de capryllactame et de caprolactame (PA 8/6), des copolymères de lauryllactame et de capryllactame (PA 12/8), des copolymères de lauryllactame et d'acide 11-aminoundécanoïque (PA 12/11). Avantageusement, le COPA utilisé dans la composition selon l'invention est obtenu au moins partiellement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du 14C. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04).

A titre d'exemples d'aminoacides d'origine renouvelable, on peut citer: l'acide 11-aminoundécanoïque produit à partir d'huile de ricin par exemple, l'acide 12-aminododécanoïque produits à partir d'huile de ricin par exemple, l'acide 10-aminodécanoïque produit à partir de l'acide décylénique obtenu par métathèse de l'acide oléïque par exemple, l'acide 9-aminononanoïque produit à partir de l'acide oléïque par exemple.

A titre d'exemples de diacides d'origine renouvelable, on peut citer, en fonction du nombre x de carbones de la molécule (Cx) :
- C4 : l'acide succinique à partir du glucose par exemple ;
- C6 : l'acide adipique à partir du glucose par exemple ;
- C7 : l'acide heptanedioïque à partir d'huile de ricin ;
- C9 : l'acide azélaïque à partir de l'acide oléïque (ozonolyse) par exemple ;
- C10 : l'acide sébacique à partir de l'huile de ricin par exemple ;
- C11 : l'acide undécanedioïque à partir d'huile de ricin ;
- C12 : l'acide dodécanedioïque à partir de biofermentation de l'acide dodecanoïque = acide laurique (huile riche : huile de palmiste et noix de coco) par exemple ;
- C13 : acide brassylique à partir de l'acide erucique (ozonolyse) que l'on trouve dans le colza par exemple ;
- C14 : acide tetradécanedioïque par biofermentation de l'acide myristique (huile riche : huile de palmiste et noix de coco) par exemple ;
- C16 : acide hexadécanedioïque par biofermentation de l'acide palmitique (huile de palme principalement) par exemple ;
- C18 : acide octadécanedioïque obtenu par biofermentation de l'acide stéarique (un peu dans toutes les huiles végétales mais majoritaire dans les graisses animales) par exemple ;
- C20 : acide eicosanedioïque obtenu par biofermentation de l'acide arachidique (majoritaire dans l'huile de colza) par exemple ;
- C22 : acide docosanedioïque obtenu par métathèse de l'acide undécylénique (huile de ricin) par exemple
- C36 : dimère d'acide gras issu des sous-produits des résineux transfomés par les procédé Kraft.
A titre d'exemples de diamines d'origine renouvelable, on peut citer, en fonction du nombre x de carbones de la molécule (Cx) :
- C4 : butanediamine obtenu par amination de l'acide succinique ;
- C5 : pentaméthylene diamine (à partir de lysine) ;
et ainsi de suite pour les diamines obtenues par amination des diacides d'origine renouvelable vus précédemment.

Par copolyamide d'origine totalement renouvelable, on entend les copolyamides résultant de la polymérisation de divers monomères (renouvelables, non renouvelables ou mixtes) tels que ceux cités ci-dessus. C'est le cas par exemple du COPA 6.6/10.10 dans lequel le monomère « 6.6 » est d'origine non renouvelable tandis que le monomère « 10.10 » est d'origine renouvelable.

Par copolyamide d'origine totalement renouvelable entrant dans la composition selon l'invention, on entend les copolyamides résultant de la polymérisation de divers monomères, tels que ceux cités ci-dessus, comme par exemple les copolyamides suivants : PA 11/10.10, PA 11/10.36, PA 10.10/10.36, et de copolyamide 11-aminoundécanoïque/N-heptyl-11-aminoundécanoïque.

On utilise avantageusement un ou plusieurs des copolyamides suivants dans la composition ou le procédé de la présente invention :
- PA 6/6.6/12, dont les ratios massiques (ratios molaires entre parenthèses) en monomères correspondants peuvent être, en pourcentage : 40/20/40 (56/12/32), 35/20/45 (50/12/38), 45/35/20 (63/21/16), 30/30/40 (45/20/35), 22/18/60 (34/12/54), 40/25/35 (56/15/29) ;
- PA 6/6.6/11/12, dont les ratios massiques en monomères correspondants peuvent être par exemple en pourcentage : 30/15/10/45 (44/10/8/38), 30/20/20/30 (45/13/17/25), ou 15/25/25/35 (25/18/23/34) ;
- PA 6/12 de ratio massique 70/30 (80/20) ;
- PA 6.9/12 de ratio massique 30/70 (22/78);
- PA Pip.9/Pip.12/11 de ratio massique 15/70/15 (16/63/21);
- PA 6/IPD.6/12 de ratio massique 20/15/65 (32/8/60) ;
- PA IPD.9/12 de ratio massique 20/80 (12/88) ;
- PA6/MPMD.12/12 de ratio massique 27/33/33 (48/19/33);
- PA 6/6.12/12 de ratio massique 30/30/40 (48/15/37);
- PA 6/Pip.12/12 de ratio massique 30/20/50 (46/10/44);
- PA 6/6.12/11/PEG.12 de ratio massique 25/21/25/30 (50/14/28/8);
- PA 6/6.10/11/PEG.10 de ratio massique 14/14/42/30 ;
- PA 6/6.6/6.10/6.I de ratio massique 40/10/40/10 (64/7/23/6);
- PA 6.10/Pip.10/Pip.12 de ratio massique 20/40/40 (40/31/29);
- PA 6/11/12 de ratio massique 10/36/54 (16/33/51)
- PA Pip.12/12 de ratio massique 35/65 (25/75)
- PA IPD.10/12 de ratio massique 80/20 (68/32)
- PA Pip. 10/12 de ratio massique 72/28 (64/36)
- PA 6/11 de ratio massique 50/50 (64/36)
- PA Pip.10/11/Pip.9 de ratio massique 65/30/5 (57/38/5)
- PA 6/6.6/6.10 de ratio massique 35/30/35 (58/21/21).

A titre d'exemples de copolyamides, on peut notamment citer ceux commercialisés sous le nom Platamid® et Platamid® Rnew par ARKEMA, Vestamelt® par Evonik, et Griltex® par EMS.

De préférence le polyamide utilisé dans la présente invention comprend au moins un homopolyamide choisi parmi PA Pip.9, PA Pip.10, PA Pip.12, PA Pip.14, PA Pip.18, PA Pip.36, PAAEP.6, PA AEP.9, PAAEP.10, PAAEP.12, PA AEP.14, PA AEP.18, PA AEP.36, et leurs mélanges et/ou au moins un copolyamide choisi parmi : PA Pip.9/Pip.12/11, PA 6/Pip.12/12, PA 6.10/Pip.10/Pip.12, PA Pip.12/12, PA Pip.10/12, PA Pip.10/11/Pip.9, et en particulier ceux dont les ratios massiques sont définis plus haut, et des mélanges de ces copolyamides.

Avantageusement, la composition selon l'invention ne comprend pas de solvant.

Elle se présente par exemple sous la forme d'un film, de poudre, de filaments, d'une grille tissée ou voile non tissé, de granulés, d'un objet moulé, et leurs mélanges.

La présente invention a également pour objet un procédé d'adhésion sur un substrat S1 élastomère à base d'acrylonitrile, ledit substrat S1 comprenant de préférence de 1 à 70% molaire d'acrylonitrile, de préférence de 1 à 60% molaire d'acrylonitrile, de préférence de 10 à 50% molaire d'acrylonitrile, sur le nombre total de moles du substrat S1, le procédé de l'invention étant caractérisé en ce qu'il utilise une composition selon l'invention telle que décrite précédemment.

De préférence ledit substrat S1 élastomère à base d'acrylonitrile comprend au moins un copolymère butadiène-acrylonitrile (NBR), et/ou ses dérivés, tels que caoutchouc nitrile carboxylé (XNBR) ou le caoutchouc nitrile hydrogéné (HNBR).

Selon un mode de réalisation particulier de l'invention, le substrat S1 comprend en outre au moins un autre élastomère sans acrylonitrile, tel que caoutchouc naturel (NR), caoutchouc synthétique tel que copolymère styrène butadiène (SBR), polyisoprène (IR), polybutadiène (BR), polychloroprène (CR) ; ledit autre élastomère représentant de préférence moins de 50% en poids sur le poids de S1.

Avantageusement, ledit substrat S1 comprend en outre un copolymère styrène butadiène (SBR). De préférence le ratio en poids NBR/SBR dans le substrat S1 est supérieur ou égal à 1 dans le cas où S1 comprend à la fois du NBR et du SBR.

Avantageusement, ledit substrat S1 comprend en outre au moins un des ingrédients suivants : pulvérulent ou charge, tels que Noir de carbone (ex : N 550), dessicant, plastifiant tel que dioxysébacate (ex : DOS), agent réticulant tel que le soufre, activateur de vulcanisation tel que ZnO, acide stéarique, accélérateur de vulcanisation (ex : MTBS, TBzTD-70), antioxydant tel que quinoléine (ex : TMQ dans les exemples ci-après), stabilisant, anti-ozone (ex : 6 PPD dans les exemples), anti-UV.

Selon un mode de réalisation avantageux du procédé de l'invention, la composition de l'invention est intégrée directement dans la formulation du substrat S1. Ainsi le substrat S1 comprend en outre de 5 à 95%, de préférence de 10 à 70%, de préférence de 10 à 50%, en poids de composition conforme à l'invention, sur le poids total de S1. Avantageusement, le procédé de l'invention comprend au moins l'une des étapes suivantes réalisée(s) sur le substrat S1 et/ou sur la composition polyamide : thermoscellage, extrusion, couchage, injection, moulage, thermoformage, calandrage et/ou pressage.

Selon un premier mode de réalisation, le procédé de l'invention consiste à assembler deux substrats S1 et S2, et est caractérisé en ce qu'il comprend les étapes suivantes :
- appliquer ladite composition sous forme liquide,
   - soit sous forme fondue à une température proche de ou supérieure à la température de fusion de la composition Tfc, notamment à une température comprise entre Tfc-30°C et Tfc+60°C,
   - soit sous forme de dispersion aqueuse, telle que décrite par exemple dans la demande de brevet FR12.56546,
      sur une surface d'au moins un des deux substrats,
- accoster les surfaces des substrats à assember,
- refroidir ou laisser sécher l'ensemble résultant de l'accostage de sorte que l'on obtient un produit stratifié dans lequel les 2 substrats S1 et S2 adhèrent l'un à l'autre.

La température de fusion de la composition utilisée dans la présente invention est avantageusement comprise dans la gamme allant de 70°C à 300°C, de préférence de 70 à 280°C, de préférence de 80°C à 230°C. Selon un deuxième mode de réalisation, le procédé de l'invention consiste à assembler deux substrats S1 et S2, caractérisé en ce qu'il comprend les étapes suivantes :
- disposer ladite composition à l'état solide entre les deux substrats S1 et S2 à assembler,
- chauffer à une température proche de ou supérieure à la température de fusion de la composition Tfc, notamment à une température comprise entre Tfc-30°C et Tfc+60°C, au moins l'interface entre S1 et S2 maintenus en contact, pour faire fondre la colle,
- refroidir (à une température inférieure à la température de fusion de la composition), de sorte que l'on obtient un produit stratifié dans lequel les 2 substrats S1 et S2 adhèrent l'un à l'autre.

Dans le cas où la composition de l'invention est intégrée directement dans la formulation du substrat S1 et selon un troisième mode de réalisation, le procédé de l'invention consiste à assembler deux substrats S1 et S2, le substrat S1 comprenant de 5 à 95%, en poids de composition conforme à l'invention, sur le poids total de S1, caractérisé en ce qu'il comprend les étapes suivantes :
- accoster les surfaces des substrats S1 et S2 à assembler
- chauffer à une température proche de (voire supérieure à) la température de fusion Tfs du substrat S1, notamment à une température comprise entre Tfs-30°C et Tfs+60°C au moins la zone de contact ainsi formée entre les deux substrats S1 et S2,
- refroidir (à une température inférieure à la température de fusion du substrat S1) au moins ladite zone de contact de sorte que l'on obtient un produit stratifié dans lequel les 2 substrats S1 et S2 adhèrent l'un à l'autre. Selon un mode de réalisation particulier de l'invention, une composition polyamide de viscosité inférieure à celle de la composition de S1 est utilisée dans le substrat S1, de sorte que, par chauffage du substrat S1, le polyamide migre à la surface de S1 et forme l'adhésion à l'interface entre S1 et S2. A titre d'exemple dans ce cas, S1 est un caoutchouc nitrile et S2 est un élastomère thermoplastique tel que du TPU, le stratifié S1-S2 servant par exemple à fabriquer une semelle de chaussure.

Selon un mode de réalisation particulier du procédé de l'invention, le matériau du substrat S1 et le matériau du substrat S2 sont de même nature. Selon un mode de réalisation alternatif du procédé de l'invention, le matériau du substrat S1 et le matériau du substrat S2 sont de nature différente, S2 étant choisi parmi les polymères thermoplastiques, les polymères thermoplastiques élastomères (TPE), les homopolymères et les copolymères, tels que les polyamides, polyamines, les polyesters, les polyéthers, les polyétheresters, les polyimides, les polycarbonates, les PVC, les résines phénoliques, les polyuréthanes réticulés ou non, notamment sous forme de mousse, les poly (éthylène acétate de vinyle), les élastomères naturels tels que caoutchouc naturel, ou les élastomères synthétiques tels que copolymère butadiène-acrylonitrile (NBR), copolymère styrène butadiène (SBR), polychloroprène (CR), caoutchouc synthétique tel que polyisoprène (IR), polybutadiène (BR), styrène-butadiène-acrylonitrile (ABS), polyacrylonitrile ; les fibres naturelles ou synthétiques, notamment fibres de polymères organiques, telles que les fibres de polyester, alcool polyvinylique, polyacétate de vinyle, polychlorure de vinyle, polyamide ; fibres de verre ou fibres de carbone ; et les matériaux textiles et tissus faits à partir de ces fibres ; ainsi que les matériaux comme le métal, le cuir, le papier et le carton ; les substrats polaires fonctionnalisés, notamment par des groupements polaires, tels que -OH, -SO3H, -Cl et/ou -NH2 ; et leurs mélanges.

Les procédés décrits plus haut peuvent en outre comprendre au moins l'une des étapes suivantes :
- nettoyage ou abrasion, avant collage, de la surface à coller d'au moins un des substrats S1 et/ou S2,
- mise sous presse de l'ensemble des substrats S1 et S2 à chaud à une température supérieure à la température de fusion de la composition de colle, et/ou
- mise sous presse de l'ensemble des substrats S1 et S2 à froid à une température inférieure à la température de fusion de la composition de colle. Lors de la mise sous presse, la pression est avantageusement comprise dans la gamme de 100 kPa à 15000 kPa (1 bar à 150 bar),
de préférence de 100 kPa à 10000 kPa (1 bar à 100 bar), cette pression étant choisie typiquement en fonction du (ou des) substrat(s), S1 (et S2) à assembler.

Avantageusement, le procédé selon l'invention n'utilise pas de solvant.

La présente invention a également pour objet un produit stratifié comprenant un substrat S1 élastomère à base d'acrylonitrile, et une composition conforme à l'invention et telle que décrite plus haut.

La présente invention a également pour objet un produit stratifié comprenant un premier substrat S1 à base d'acrylonitrile, et un second substrat S2 adhérant l'un à l'autre au moyen d'une composition de colle conforme à l'invention.

La présente invention a encore pour objet l'utilisation d'une composition selon l'invention, comme promoteur d'adhérence de substrat(s) S1 élastomère(s) à base d'acrylonitrile, ledit promoteur d'adhérence comprenant de 50 à 100%, de préférence de 70 à 100% molaire de fonctions amides tertiaires, sur le nombre de mol total de fonctions amides de la composition. Avantageusement, le promoteur d'adhérence forme une colle thermofusible prête à l'emploi.

De manière alternative, le promoteur d'adhérence est incorporé directement dans la composition du substrat S1, de préférence à raison de 5 à 95%, de préférence 10 à 70%, de préférence 10 à 50%, en poids, sur le poids total de S1.

La présente invention a donc aussi pour objet un article élastomère à base d'acrylonitrile, caractérisé en ce qu'il comporte de 5 à 95% en poids, de préférence de 10 à 70% en poids, de préférence de 10 à 50% en poids, de composition selon l'une quelconque des revendications 1 à 6, sur le poids de l'article.

Le substrat S1 peut notamment se présenter sous la forme d'un objet moulé ou extrudé, tel que tube, tuyau, joint, courroie, réservoir flexible, film, couche de matériau multicouche, semelle de chaussure, notamment de chaussure de sport, article automobile.

### EXEMPLES

Les exemples suivants illustrent l'invention sans la limiter.

### Exemple 1 - Comparaison de 2 types de compositions polyamides pour le collage thermofusible de 2 types de plaques de caoutchouc

On utilise deux polyamides thermofusibles différents :
- un polyamide 1 selon l'invention comportant au moins un monomère à fonction amide issue d'une amine secondaire (le copolyamide Pip.9/Pip.12/11 de %massique 15/70/15, correspondant à un ratio molaire 16/63/21)
- un polyamide 2 comparatif ne comportant pas de monomère à fonction amide issue d'une amine secondaire (le copolyamide 6/6.6/6.10/6.I de %massique 40/10/40/10, correspondant à un ratio molaire 64/7/23/6).

On utilise deux caoutchoucs polaires différents : un NBR (Nitrile Butadiène Rubber) et un CR (Chloroprène Rubber) pour réaliser des plaques en caoutchouc.

### Formules :

Les deux formules retenues sont couramment utilisées dans l'industrie du caoutchouc, elles sont présentées dans le tableau 1 ci-dessous.

Dans les tableaux ci-après, tous les ingrédients sont donnés en nombre de parts en poids, ce qui est noté « PCE ».

**Tableau 1**

| Formule CR | A1 | | Formule NBR | A2 |
|---|---|---|---|---|
| Ingrédients | PCE | | Ingrédients | PCE |
| CR Baypren 110 (CR) | 100 | | NBR Krynac 45.50 | 100 |
| MgO | 4 | | Soufre | 0,5 |
| ZnO | 3 | | ZnO | 3 |
| Acide stéarique | 0,5 | | Acide stéarique | 1 |
| | | | TMQ | 1 |
| 6 PPD | 1,5 | | 6 PPD | 2 |
| Noir N 550 | 50 | | Noir N 550 | 95 |
| DOS | 15 | | DOS | 25 |
| Rhenogran MTT 80 | 1 | | TETD | 2 |
| | | | MTBS | 2 |
| TBzTD-70 | 2,5 | | TBzTD-70 | 3 |

### Mode opératoire de mélangeage CR :

Réalisation de la base CR dans un mélangeur interne de type Banbury de 2000 cm3 :
- Ouverture du circuit de refroidissement à 15°C
- Vitesse des rotors 50 tr/min
- Introduction de la gomme CR pendant 30 s
- Ajout du MgO
- Introduction de l'acide stéarique, du 6 PPD, du noir de carbone et du DOS
- Coup de balai après 1 minute
- Mélangeage pendant 7 minutes

La température du mélange est de 78°C à cet instant.

Accélération en mélangeur interne :
- Vitesse des rotors 30 tr/min
- Introduction des accélérateurs (Rhenogran MTT 80, TBzTD et ZnO)
- Mélangeage pendant 3 minutes.

Reprise sur mélangeur à cylindres :
- Ouverture du circuit de refroidissement à 15°C
- Vitesse des cylindres 20 et 20 tr/min
- Sortie du mélange en plaque de 2,3 mm d'épaisseur.

### Mode opératoire de mélangeage NBR :

Réalisation de la base CR dans un mélangeur interne de type Banbury de 2000 cm3 :
- Ouverture du circuit de refroidissement à 15°C
- Vitesse des rotors 50 tr/min
- Introduction de la gomme NBR pendant 30 s
- Ajout du soufre
- Introduction de l'acide stéarique, du ZnO, du TMQ, du 6 PPD, du noir de carbone et du DOS
- Coup de balai après 1 minute
- Mélangeage pendant 6 minutes

La température du mélange est de 90°C à cet instant.

Accélération en mélangeur interne
- Vitesse des rotors 30 tr/min
- Introduction des accélérateurs (TETD, MTBS, TBzTD)
- Mélangeage pendant 3 minutes.

Reprise sur mélangeur à cylindres
- Régulation des cylindres à 60°C
- Vitesse des cylindres 20 et 20 tr/min
- Sortie du mélange en plaque de 2,3 mm d'épaisseur.

Les ébauches pour le moulage des plaques (300X300X2mm) sont découpées dans ces plaques.

### Fabrication des plaques :

Les plaques (300 X 300 X 2 mm) sont moulées au t95 à 170°C, et 10000 kPa (100 bar) pour chaque élastomère.

### Collage des plaques :

Pour rendre la surface (lisse) des plaques plus propice à l'adhésion des polyamides sur ces dernières, les plaques de NBR et de CR sont abrasées au papier de verre (grain 240).

Les plaques de 300 X 300 mm sont collées dans une presse à 155°C, avec une pression de 3000 kPa (30 bars) pendant 15 minutes, puis immédiatement refroidies dans une presse froide (40°C) sous 3000 kPa (30 bars) pendant 15 minutes également afin de maintenir le film sous pression pendant la cristallisation.

L'interface collée avec le polyamide (entre les plaques de 300X300) est de 160 mm de long par 300 de large, ensuite des éprouvettes de 250 mm de long par 25 mm de large, avec une longueur de 150 mm collée, sont découpées à l'emporte pièce, pour des essais de pelage à 180°.

### Essais de pelage :

Mesure de la force de pelage, dans les conditions suivantes :
- Norme : NF EN 1895
- Longueur pelée : 150 mm
- Vitesse de traction : 100 mm / min
- Température : 23°C
- Humidité relative : 50%
- La force de pelage est exprimée en N/cm.

Les résultats sont présentés dans le tableau 2 ci-dessous.

**Tableau 2**

| | Force de pelage | |
|---|---|---|
| | 3,39 | Moyenne des essais |
| | 3,60 | 3,6 |
| CR + PA1 | 3,80 | Écart type |
| | | 0,21 |
| | 1,74 | Moyenne des essais |
| | 1,67 | 1,6 |
| CR + PA2 | 1,51 | Écart type |
| | | 0,12 |
| | 40,8 | Moyenne des |
| | 41,0 | 41,6 |
| NBR + PA1 | 43,1 | Écart type |
| | | 1.31 |
| | 11,0 | Moyenne des essais |
| | 11,2 | 11,3 |
| NBR + PA2 | 11,5 | Écart type |
| | | 0,26 |

Pour chaque essai la force moyenne de pelage a été notée. Il convient tout d'abord de préciser que pour le NBR collé avec le PA1 l'adhésion est tellement forte que la rupture a lieu au niveau du caoutchouc. Les forces de pelage sont bien meilleures pour le NBR que pour le CR. Dans tous les cas le PA1 donne des forces de pelage plus élevées que le PA2. De plus, la valeur de force de pelage de l'assemblage NBR+PA1 est sous estimée car cette force correspond à la déchirure de l'éprouvette en caoutchouc et non à la force de pelage.

### Etude des faciès de rupture :

### - CR/Polyamide :

En ce qui concerne le polychloroprène, on constate une rupture à l'interface caoutchouc / Polyamide sans arrachement ni transfert de matière entre les deux phases. Le film de polyamide est peu déformé et reste d'un coté ou de l'autre du CR, la surface du CR n'ayant pas conservé le film de polyamide qui semble peu endommagé ou déformé.

Ceci traduit une faible adhésion CR / polyamide cohérente avec les faibles valeurs de forces de pelage.

### - NBR/Polyamide :

Les facies de rupture sur le NBR montrent une bien meilleure adhésion des Polyamide sur le caoutchouc. L'assemblage PA1 / NBR n'a pas pu être décollé, car la rupture se fait au niveau de la phase caoutchouc, ce qui suggère une très bonne interface entre les deux polymères. L'assemblage PA2 / NBR n'est pas aussi performant, on note une déformation du film de PA2 par fibrillation, ainsi qu'une déformation de la surface du NBR a certains endroits.

### Conclusion des essais de l'exemple 1 :

Les essais de collage de mélanges de formulations types, vulcanisées au soufre, à base d'élastomère NBR et CR ont été réalisés avec deux références de polyamide : le PA1 et le PA2. Le collage du CR est inférieur à celui obtenu avec le NBR. Le PA1 présente pour les deux élastomères des forces de pelage supérieures par rapport à celles obtenues avec le PA2. Le collage du NBR avec le PA1 est de bonne qualité puisque la force maximum mesurée correspond à une rupture cohésive dans l'élastomère.

### Exemple 2

### Exemple 2.1 - Comparaison du niveau de collage entre 2 plaques réticulées composées d'un coupage de NBR et SBR (à différents taux) avec le PA1 Formules :

La formule de base retenue C0 est proche de celle utilisée pour l'exemple 1 avec une plus faible quantité de noir de carbone et de plastifiant. Cette formule étant moins diluée, les interactions entre l'élastomère et le polyamide seront favorisées.

Cette formule est déclinée pour trois formulations (B1, B2 et B3) comprenant des ratios NBR/SBR respectivement de 25/75, 50/50 et 75/25.

Les formules sont présentées dans le tableau 3 ci-dessous.

**Tableau 3**

| **Formule du substrat** | **B1** | **B2** | **B3** | **C0** | **C1** | **C2** | **C3** | **C4** | **D1** | **D2** | **D3** |
|---|---|---|---|---|---|---|---|---|---|---|---|
| Ingrédients | PCE | PCE | PCE | PCE | PCE | PCE | PCE | PCE | PCE | PCE | PCE |
| NBR Krynac 44.50 | 75 | 50 | 25 | **100** | 100 | 100 | 100 | 100 | **100** | | |
| NBR Perbunan 28.46 | | | | | | | | | | **100** | |
| NBR Perbunan 18.46 | | | | | | | | | | | **100** |
| SBR 1502 | **25** | **50** | **75** | | | | | | | | |
| Soufre | 0,5 | 0,5 | 0,5 | **0,5** | 0,5 | 0,5 | 0,5 | 0,5 | 0,5 | 0,5 | 0,5 |
| ZnO | 3 | 3 | 3 | **3** | 3 | 3 | 3 | 3 | 3 | 3 | 3 |
| Acide stéarique | 1 | 1 | 1 | **1** | 1 | 1 | 1 | 1 | 1 | 1 | 1 |
| TMQ | 1 | 1 | 1 | **1** | 1 | 1 | 1 | 1 | 1 | 1 | 1 |
| 6 PPD | 2 | 2 | 2 | **2** | 2 | 2 | 2 | 2 | 2 | 2 | 2 |
| N 550 | 65 | 65 | 65 | **65** | 65 | 65 | 65 | 65 | 65 | 65 | 65 |
| DOS | 15 | 15 | 15 | **15** | 15 | 15 | 15 | 15 | 15 | 15 | 15 |
| TETD | | | | | | | | | | | |
| MTBS | 2 | 2 | 2 | **2** | 2 | 2 | 2 | 2 | 2 | 2 | 2 |
| TBzTD-70 | 3 | 3 | 3 | **3** | 3 | 3 | 3 | 3 | 3 | 3 | 3 |
| Polyamide sans Pip | | | | | | | **15** | **30** | | | |
| Polyamide avec Pip | | | | | **15** | **30** | | | | | |

### Réalisation des mélanges :

Les mélanges ont été réalisés dans un mélangeur interne de type Banbury de 2000 cm3. Mode opératoire de mélangeage en mélangeur interne :
- Ouverture du circuit de refroidissement à 15°C
- Vitesse des rotors 50 tr/min
- Introduction de la gomme CR pendant 30 s
- Introduction de l'acide stéarique, du ZnO, du TMQ, du 6 PPD, du noir de carbone et du DOS
- Coup de balai après 1 minute
- Mélangeage pendant 7 minutes

La température du mélange à la sortie du mélangeur se situe entre 92 et 98°C.

La base du mélange a été reprise sur les cylindres et les accélérateurs y ont été incorporés.

Mode opératoire de mélangeage sur mélangeur à cylindres :
- Ouverture du circuit de refroidissement à 15°C
- Vitesse des cylindres 18 et 24 tr/min
- Introduction des accélérateurs (MBTS, TBzTD et Soufre)
- Sortie du mélange en plaques de 2,3 mm d'épaisseur.

Les ébauches pour le moulage des plaques (300X300X2mm) sont découpées dans ces plaques.

### Caractérisation rhéologique des mélanges :

Les plaques (300 X 300 X 2 mm) sont moulées 8 minutes à 170°C, et avec une pression 10000 kPa (100 bar) pour chaque élastomère.

### Collage des plaques avec le PA1 :

Collage des plaques dans les mêmes conditions que dans l'exemple 1 :
- Abrasion au papier de verre (grain 240) des surfaces
- Pressage à chaud :
   ∘ Température 155°C
   ∘ Temps de pressage à chaud de 15 minutes
   ∘ Pression 2500 kPa (25 bar)
- Refroidissement sous pression
   ∘ Température 40°C
   ∘ Temps de pressage à froid de 15 minutes
   ∘ Pression 3000 kPa (30 bar)

L'interface collée avec le PA1 (entre les plaques de 300X300) est de 160 mm de long par 300 mm de large. Les éprouvettes de pelage de dimensions 250 mm de long par 25 mm de large, avec une longueur de 150 mm collée, sont découpées à l'emporte pièce.

### Essais de pelage :

Force de pelage, conditions d'essai : Norme NF EN 1895, Longueur pelée : 150 mm, Vitesse de traction : 100 mm / min, Température : 23°C, Humidité relative : 50%, La force de pelage est exprimée en N/cm.

Les résultats sont présentés dans le tableau 4 ci-dessous.

**Tableau 4**

| | Force de pelage | |
|---|---|---|
| B1 + PA1 (75% NBR) | 40,1 | Moyenne des essais (N/cm) |
| | 39,5 | 39,3 |
| | 38,3 | Écart type |
| | | 0,92 |
| B2 + PA1 (50/50) | 36,8 | Moyenne des essais (N/cm) |
| | 38,4 | 37,7 |
| | 37,9 | Écart type |
| | | 0,84 |
| B3 + PA1 (25% NBR) | 10,0 | Moyenne des essais (N/cm) |
| | 12,3 | 11,3 |
| | 10,8 | Écart type |
| | | 1,16 |

On note une nette différence entre le mélange où le SBR est majoritaire et les deux autres mélanges, le rapport des forces de pelage est de 3 à 4 environ. Ces résultats traduisent un manque d'adhésion du PA1 sur le SBR. Le fait d'avoir des forces moyennes de pelage très proches à 50 et 75% de NBR, suggère une continuité de cette phase pour ces deux taux de NBR, l'inversion de phase se ferait donc entre 50 et 75% de SBR.

Etude des faciès de rupture lors des essais de pelage sur les mélanges NBR/SBR :
Les échantillons B1 et B2 présentent des ruptures cohésives dans le caoutchouc, alors que pour l'échantillon B3 on a une décohésion entre le caoutchouc et le polyamide.

### Conclusion de l'exemple 2.1 :

Le collage avec le PA1 de mélanges réticulés à base d'élastomères SBR/NBR est plus élevé sur les mélanges formulés avec une majorité de NBR. L'adhésion est cohésive dans l'élastomère avec une quantité inférieure à 50% de SBR.

### Exemple 2.2 - Utilisation des polyamides PA1 et PA2 en tant qu'additif dans une formule NBR et influence sur les propriétés mécaniques.

Chacun des PA2 et PA1 est ajouté en tant qu'additif dans une formule NBR. Les formules des mélanges sont détaillées dans le tableau 3 ci-dessus.

### Réalisation des mélanges :

Le mélange à base d'élastomère a été fabriqué en mélangeur interne de type Banbury de 2000 cm3, l'ajout des polyamides est réalisé sur mélangeur à cylindres.

Mode opératoire de mélangeage en mélangeur interne :
- Ouverture du circuit de refroidissement à 15°C
- Vitesse des rotors 50 tr/min
- Introduction de la gomme CR pendant 30 s
- Introduction de l'acide stéarique, du ZnO, du TMQ, du 6 PPD, du noir de carbone et du DOS
- Coup de balai après 1 minute
- Mélangeage pendant 7 minutes

La température du mélange est de 93°C à la sortie du mélangeur.

Mode opératoire de mélangeage sur cylindres :
- Introduction du polyamide:
   ∘ Préchauffage des mélanges à 120°C en étuve pendant 15 minutes
   ∘ Température des cylindres à 30°C.
   ∘ Vitesse des cylindres 18 et 24 tr/min
   ∘ Plastification du mélange
   ∘ Réalisation de quatre passages au fin à 90° par rapport au sens de calandrage précédent.
   ∘ Introduction du Polyamide après plastification de la gomme.
   ∘ Ajout des additifs (soufre + TBzTD + MBTS).
   ∘ Sortie du mélange en plaques de 2,3 mm d'épaisseur.

Les ébauches pour le moulage des plaques (300X300X2mm) sont découpées dans ces plaques.

### Essais mécaniques :

Essais de traction, conditions d'essai : Norme NF ISO 37, Longueur utile, lo 20 mm, Eprouvettes : H2, Vitesse de traction : 500 mm / min, Température : 23°C, Humidité relative : 50%.

Les propriétés mécaniques sont présentées dans le tableau 5 :

**Tableau 5**

| | **C0** | **C1** | **C2** | **C3** | **C4** |
|---|---|---|---|---|---|
| Taux de polyamide | 0 | 15 | 30 | 15 | 30 |
| contrainte max (MPa) | 13,3 | 13,8 | 13 | 12,7 | 13,7 |
| allongement max (%) | 542 | 460 | 500 | 500 | 466 |
| Module à 50% (MPa) | 1,6 | 3,3 | 4,2 | 2,3 | 2,6 |
| Module à 100% (MPa) | 2,5 | 4,5 | 5,3 | 3,5 | 3,8 |
| Module à 200% (MPa) | 5,3 | 7,4 | 7,4 | 6,2 | 6,8 |

Les propriétés ultimes des mélanges (contraintes et allongements à la rupture) évoluent peu avec l'ajout de polyamide. Par contre, on observe une augmentation du module dans les petites déformations. En effet l'ajout de polyamide augmente de façon très sensible la valeur de la contrainte à 50% d'allongement, la différence de rigidité est moindre à 200% d'allongement. Plus on se rapproche de la rupture, plus les écarts se réduisent entre le témoin C0 et les échantillons C1 à C4, jusqu'à avoir des contraintes presque identiques au niveau de la rupture. Le polyamide perd de sa rigidité aux grandes déformations. Le polyamide PA1 a aussi un effet renforçant plus prononcé que le PA2. Cela peut provenir de la qualité de l'interface mais aussi de la taille des inclusions, qui est elle-même liée à la tension interfaciale ainsi qu'à la viscosité du polyamide.

Essais de déchirement, conditions d'essai :
- Norme : NF ISO 34
- Forme de l'éprouvette : Angulaire avec et sans entaille
- Découpe des éprouvettes : Dans le sens de calandrage et perpendiculaire au calandrage
- Vitesse de traction : 100 mm / min
- Sens de déchirement : Calandrage et traverse
- Température : 23°C
- Humidité relative : 50%

Les résultats sont présentés dans le tableau 6 ci-dessous :

**Tableau 6**

| **Non Entaillé** | **C0** | **C1** | **C2** | **C3** | **C4** |
|---|---|---|---|---|---|
| Taux de Polyamide | 0 | 15 | 30 | 15 | 30 |
| moyenne perpendiculaire au calandrage (N/mm) | 45,8 | 44,6 | 49,6 | 45,8 | 52,5 |
| écart type | 1,85 | 1,6 | 1,2 | 1,7 | 2,5 |
| moyenne sens calandrage (N/mm) | 41,5 | 43 | 47,6 | 42 | 45 |
| écart type | 1,5 | 2 | 0,7 | 0,95 | 2,15 |
| | | | | | |

| **Entaillé** | **C0** | **C1** | **C2** | **C3** | **C4** |
|---|---|---|---|---|---|
| moyenne perpendiculaire au calandrage (N/mm) | 33,5 | 33,9 | 41,1 | 39,1 | 42,6 |
| écart type | 1,65 | 1,8 | 0,5 | 0,7 | 2,8 |
| moyenne sens calandrage (N/mm) | 28,51 | 27,8 | 37,2 | 28,7 | 27,5 |
| écart type | 0,35 | 0,3 | 1 | 0,7 | 0,7 |

Les deux polyamides améliorent légèrement la résistance au déchirement au taux de 30 PCE. La seule variation significative observée à 15 PCE de polyamide est celle du déchirement entaillé dans le sens perpendiculaire au calandrage pour le PA2. On remarque aussi que le PA1 tend à rendre les échantillons plus isotropes, ceci étant d'autant plus visible pour le déchirement avec entaille. Les tailles et formes des inclusions (globulaires ou fibrillaires) peuvent être à l'origine de ces différences.

### Conclusion de l'exemple 2.2 :

Lorsque le polyamide est ajouté en temps qu'ingrédient dans un mélange à base de NBR, on observe un renforcement aux faibles déformations du matériau avec une augmentation du module à 50% pour les deux références PA1 et PA2. Ce renforcement est plus accentué pour PA1 que pour le PA2, sans doute en raison d'une meilleure compatibilité des interfaces, comme on a pu le constater dans l'exemple précédent.

La résistance au déchirement est améliorée à 30 PCE de PA, et on remarque que le PA1 donne au mélange des propriétés plus isotropes que le PA2.

Des observations MEB réalisées pour analyser la forme, la taille et la répartition des inclusions de PA dans le caoutchouc, pour les formules C2 et C4, ont montré que :
- les deux polyamides sont bien dispersés dans le NBR car on n'observe pas d'inclusion de 10 µm ou plus.
- les morphologies des mélanges polyamide / NBR sont globulaires dans les deux cas, avec des inclusions ne présentant pas de facteur de forme important.
- le polyamide PA1 se disperse mieux dans le NBR que le PA2 et donne des inclusions plus petites.

### Exemple 3 - Comparaison du collage de substrat caoutchouc par polyamide et par les systèmes traditionnels

La formule du substrat caoutchouc NBR est celle de C0 dans le tableau 3. La réalisation des mélanges et des plaques NBR est similaire à celle décrite dans l'exemple 2.

### Réalisation du mélange dans un mélangeur interne de type Banbury de 2000 cm3 :

- Ouverture du circuit de refroidissement à 15°C
- Vitesse des rotors 50 tr/min
- Introduction de la gomme NBR pendant 30 s
- Introduction de l'acide stéarique, du ZnO, du TMQ, du 6 PPD, du noir de carbone et du DOS
- Coup de balai après 1 minute
- Mélangeage pendant 7 minutes

La température du mélange est à 92°C à la fin de cette étape.

Reprise et accélération sur mélangeur à cylindres :
- Ouverture du circuit de refroidissement à 15°C
- Vitesse des cylindres 18 et 22 tr/min
- Introduction des accélérateurs (MBTS, TBzTD et Soufre)
- Sortie du mélange en plaques de 2,3 mm d'épaisseur.

Les ébauches pour le moulage des plaques (300 X 300 X 2mm) sont découpées dans ces plaques.

Les plaques (300 X 300 X 2 mm) sont moulées 10 minutes à 170°C, et 100 bar pour chaque élastomère.

### Collage des plaques avec le Polyamide :

Les plaques de NBR sont abrasées au papier de verre (grain 240). En se basant sur les essais effectués lors des exemples 1 et 2, les conditions de collage des plaques sont les suivantes :
Pressage à chaud à 155°C pendant 15 minutes avec une pression de 25 bar, puis refroidissement à 40°C sous pression de 30 bar, pendant un temps de pressage à froid de 15 minutes.

L'interface collée avec le polyamide (entre les plaques de 300X300) est de 160 mm de long par 300mm de large. Des éprouvettes de 250 mm de long par 25 mm de large, avec une longueur de 150 mm collée, sont découpées à l'emporte pièce, pour des essais de pelage à 180°.

### Collage des plaques avec un agent d'adhérisation et une dissolution :

Deux autres procédés de collage sont réalisés, l'un avec un agent d'adhérisation commercial, Chemosil X6025 de chez LORD, l'autre avec une dissolution de mélange NBR développée pour coller des mélanges de NBR déjà réticulées.

Comme pour le collage avec le polyamide, les plaques de NBR sont abrasées au papier de verre (grain 240). Dans les deux cas, les conditions de collages sont les suivantes :
- Homogénéisation de la dissolution accélérée ou de l'agent adhérisant
- Application de la colle ou de l'agent adhérisant au pinceau sur les deux faces à coller.
- Séchage du solvant 20 minutes à l'ambiante (20°C)
- Assemblage et cuisson sous presse à 10000 kPa (100 bar) et 180°C pendant 10 minutes pour la dissolution et 30 minutes pour l'agent d'adhérisation.

Les éprouvettes sont les mêmes que pour le mélange NBR collé avec le Polyamide.

### Essais de pelage

Force de pelage, Conditions d'essais : Norme : NF EN 1895, Longueur pelée : 150 mm, Vitesse de traction : 100 mm / min, Température 23°C, Humidité relative : 50%, La force de pelage est exprimée en N/cm.

**Tableau 7**

| | **Force de pelage** | |
|---|---|---|
| PA1 | 83,2 | Moyenne des essais |
| | 86,8 | 86,5 |
| | 89,6 | Écart -type |
| | | 3,2 |
| Dissolution | 28,8 | Moyenne des essais |
| | 30,4 | 30,7 |
| | 32,8 | Écart -type |
| | | 2,0 |
| X6025 | 26,4 | Moyenne des essais |
| | 23,6 | 25,1 |
| | 25,2 | Écart -type |
| | | 1,4 |

On remarque que les forces de pelages sont deux fois moins élevées pour les méthodes utilisant des dissolutions ou agent d'adhérisation qu'avec le PA1.

### Etude des faciès de rupture :

Les assemblages avec le Chemosil X6025 et avec la dissolution donnent des surfaces rugueuses. Dans le cas de l'agent adhérisation, la rupture a lieu essentiellement au niveau de l'agent lui-même ou dans le caoutchouc. La rupture arrive aussi a l'interface caoutchouc / X6025 car on peut apercevoir l'état de surface des plaques à certains endroits.

Dans le cas de la dissolution la rugosité est plus prononcée et la surface des plaques caoutchoucs ne transparait à aucun endroit. La rupture ne se situe pas à l'interface mais dans la gomme. La quantité de caoutchouc arrachée de part et d'autre de l'interface est plus importante que dans le cas de l'agent adhérisant.

La rupture la plus cohésive est celle de l'assemblage avec le PA1, où après 5 cm de rupture dans le caoutchouc l'essai s'arrête, car la rupture se propage au sein de l'éprouvette provoquant son arrachement.

Les faciès de rupture ainsi que les forces d'adhésion permettent de dire que le système le plus efficace avec la formule à base de NBR testée est le PA1, ensuite vient la dissolution et enfin l'agent d'adhérisation.

Comme dans l'exemple 1, on trouve avec l'assemblage NBR / PA1 une rupture au niveau du caoutchouc qui provoque un arrachement d'une patte de l'éprouvette ne permettant pas d'effectuer le pelage sur 15 cm de longueur comme préconisé par la norme. La différence entre les résultats des deux études se situe au niveau des forces de pelage.

### Exemple 4 - Etude de l'adhésion du Polyamide sur des substrats NBR comprenant différents taux d'acrylonitrile.

### Formules :

Les trois substrats à base de NBR de formules respectives D1, D2 et D3 du tableau 3 ont tous une viscosité Mooney entre 44 et 50 (deuxième nombre de la désignation) et leur taux d'acrylonitrile varie de 18% à 45% (premier nombre de l'indice). Le reste de la formule reste identique.

### Mélanges :

Les mélanges sont réalisés selon le même procédé que dans l'exemple 3.

Essais de pelage : La force de pelage est mesurée comme précédemment.

**Tableau 8**

| | **Force de pelage (N/cm)** | |
|---|---|---|
| 4450 | 83,2 | Moyenne des essais |
| | 86,8 | 86,5 |
| | 89,6 | Écart -type |
| | | 3,2 |
| 2846 | 64 | Moyenne des essais |
| | 60,8 | 60,9 |
| | 58 | Écart -type |
| | | 3,0 |
| 1846 | 32,8 | Moyenne des essais |
| | 29,2 | 30,9 |
| | 30,8 | Écart -type |
| | | 1,8 |

Les valeurs de forces de pelages sont directement liées au taux d'acrylonitrile (Tableau 8).

On remarque d'ailleurs que si l'on reprend les valeurs obtenues pour des mélange NBR 4450 / SBR et que l'on calcule le taux d'acrylonitrile présent dans le mélange de gomme, la force de pelage est directement liée au taux d'acrylonitrile. Ceci semble vrai que ce soit dans un mélange de gommes NBR / SBR ou avec des NBR comportant différents taux d'ACN.

### Etude des faciès de rupture :

Les facies de rupture montrent aussi clairement l'évolution de la qualité de l'interface avec le taux d'acrylonitrile. Dans le cas du mélange avec le NBR 1846 on remarque que la rupture est à 70% à l'interface caoutchouc/Polyamide et à 30% dans le caoutchouc environ.

Pour les mélanges à bases de caoutchoucs contenant plus d'acrylonitrile la rupture à toujours lieu dans le caoutchouc. Pour le 2846 on a un arrachement de la patte de l'éprouvette après 7 à 12 cm de propagation de la rupture, alors que dans le cas du 4450 cet arrachement est prématuré, après 5 cm de propagation environ.

### Conclusion de l'exemple 4 :

Ces essais permettent de vérifier l'efficacité du collage du PA1 selon l'invention sur des substrats à base de NBR :
- Les forces de pelage obtenues avec le polyamide sont plus de 2 fois supérieures à celles mesurées avec une dissolution ou un agent d'adhérisation.
- Les forces de pelage sont d'autant plus élevées que le taux d'acrylonitrile du polymère utilisé est important. Cette observation confirme donc l'affinité particulière entre la fonction acrylonitrile du NBR et le polyamide.

En définitive, la composition et le procédé de collage selon l'invention fournissent un moyen de collage simple sans solvant permettant une meilleure adhésion sur substrat à base de NBR que les procédés de collage existants qui nécessitent l'utilisation de solvant(s).

## Revendications

1. Composition polyamide thermoadhésive sur substrat élastomère à base d'acrylonitrile, **caractérisée en ce qu'**elle comprend de 10 à 100% molaire de fonctions amides tertiaires, sur le nombre de moles total de fonctions amides de la composition.

2. Composition selon la revendication 1, dans laquelle les fonctions amides tertiaires sont issues d'au moins un composé aliphatique et/ou ou cycloaliphatique à fonction amine secondaire.

3. Composition selon la revendication 1 ou 2, dans laquelle le composé aliphatique et/ou ou cycloaliphatique à fonction amine secondaire est choisi parmi la pipérazine (Pip), pipéridine, pyrrolidine, l'aminoéthylpipérazine (AEP), l'acide N-heptyl-11-aminoundécanoïque, le 1,3-di-(4-piperidyl)propane, le 1,2-di-(4-piperidyl)éthane, et leurs mélanges.

4. Composition selon l'une quelconque des revendications 1 à 3, comprenant de 10 à 100% molaire d'au moins un monomère choisi parmi : Pip.9, Pip.10, Pip.12, Pip.14, Pip.18, Pip.36, AEP.6, AEP.9, AEP.10, AEP.12, AEP.14, AEP.18, AEP.36, et leurs mélanges, sur le nombre de moles total de polyamide de la composition.

5. Composition selon l'une quelconque des revendications précédentes, **caractérisée en ce qu'**elle comprend au moins un copolyamide choisi parmi : PA Pip.9/Pip.12/11, PA 6/Pip.12/12, PA 6.10/Pip.10/Pip.12, PA Pip.12/12, PA Pip.10/12, PA Pip.10/11/Pip.9, et leurs mélanges.

6. Composition selon l'une quelconque des revendications précédentes, **caractérisée en ce qu'**elle comprend en outre au moins l'un des monomères suivants : 4.6, 4.T, 5.4, 5.9, 5.10, 5.12, 5.13, 5.14, 5.16, 5.18, 5.36, 6, 6.4, 6.9, 6.10, 6.12, 6.13, 6.14, 6.16, 6.18, 6.36, 6 .T, 9, 10.4, 10.9, 10.10, 10.12, 10.13, 10.14, 10.16, 10.18, 10.36, 10.T, 11, 12, 12.4, 12.9, 12.10, 12.12, 12.13, 12.14, 12.16, 12.18, 12.36, 12.T, et leurs mélanges sous forme d'alliage ou de copolyamide.

7. Composition selon l'une quelconque des revendications précédentes, **caractérisée en ce qu'**elle se présente sous la forme d'un film, de poudre, de filaments, d'une grille tissée ou voile non tissé, de granulés, d'un objet moulé, et les mélanges de ces formes.

8. Procédé d'adhésion sur substrat S1 élastomère à base d'acrylonitrile, **caractérisé en ce qu'**il comporte l'utilisation d'une composition conforme à l'une quelconque des revendications précédentes.

9. Procédé selon la revendication 8, dans lequel ledit substrat S1 élastomère à base d'acrylonitrile comprend au moins un copolymère butadiène-acrylonitrile (NBR).

10. Procédé selon l'une quelconque des revendications 8 ou 9, dans lequel ledit substrat S1 comprend en outre au moins un autre élastomère sans acrylonitrile.

11. Procédé selon l'une quelconque des revendications 8 à 10, dans lequel ledit substrat S1 comprend en outre au moins l'un des ingrédients suivants : pulvérulent, charge, plastifiant, agent réticulant, activateur de vulcanisation, accélérateur de vulcanisation.

12. Procédé selon l'une quelconque des revendications 8 à 11, dans lequel ledit substrat S1 comprend en outre de 5 à 95% en poids de composition conforme à l'une quelconque des revendications 1 à 6, sur le poids total de S1.

13. Procédé selon l'une quelconque des revendications 8 à 12, **caractérisé en ce qu'**il comprend au moins l'une des transformations suivantes réalisée(s) sur le substrat S1 et/ou sur la composition polyamide : thermoscellage, extrusion, couchage, injection, moulage, thermoformage, calandrage et/ou pressage.

14. Procédé selon l'une quelconque des revendications 8 à 13, pour assembler deux substrats S1 et S2, **caractérisé en ce qu'**il comprend les étapes suivantes :
- appliquer ladite composition sous forme liquide sur une surface d'au moins un des deux substrats,
- accoster les surfaces des substrats à assembler,
- refroidir ou laisser sécher l'ensemble résultant de l'accostage de façon à obtenir un produit stratifié dans lequel les 2 substrats S1 et S2 adhèrent l'un à l'autre.

15. Procédé selon l'une quelconque des revendications 8 à 13, pour assembler deux substrats S1 et S2, **caractérisé en ce qu'**il comprend les étapes suivantes :
- disposer ladite composition à l'état solide entre les deux substrats S1 et S2 à assembler,
- chauffer à une température proche de la température de fusion de la composition, au moins l'interface entre S1 et S2 maintenus en contact, pour faire fondre la composition,
- refroidir de sorte de façon à obtenir un produit stratifié dans lequel les 2 substrats S1 et S2 adhèrent l'un à l'autre.

16. Procédé selon la revendication 12, pour assembler deux substrats S1 et S2, **caractérisé en ce qu'**il comprend les étapes suivantes :
- accoster les surfaces des substrats S1 et S2 à assembler,
- chauffer à une température proche de la température de fusion du substrat S1 au moins la zone de contact ainsi formée entre les deux substrats S1 et S2,
- refroidir au moins ladite zone de contact de façon à obtenir un produit stratifié dans lequel les 2 substrats S1 et S2 adhèrent l'un à l'autre.

17. Procédé selon l'une quelconque des revendications 8 à 15, dans lequel le matériau du substrat S1 et le matériau du substrat S2 sont de même nature.

18. Procédé selon l'une quelconque des revendications 8 à 16, dans lequel le matériau du substrat S1 et le matériau du substrat S2 sont de nature différente, S2 étant choisi parmi les polymères thermoplastiques, les polymères thermoplastiques élastomères (TPE), les homopolymères et les copolymères, tels que les polyamides, polyamines, les polyesters, les polyéthers, les polyétheresters, les polyimides, les polycarbonates, PVC, les résines phénoliques, les polyuréthanes réticulés ou non, les poly (éthylène acétate de vinyle), les élastomères naturels, ou les élastomères synthétiques ; les fibres naturelles ou synthétiques ; fibres de verre ou fibres de carbone ; et les matériaux textiles et tissus faits à partir de ces fibres ; ainsi que le métal, le cuir, le papier et le carton ; les substrats polaires fonctionnalisés; et leurs mélanges.

19. Procédé selon l'une quelconque des revendications 8 à 18, comprenant en outre au moins l'une des étapes suivantes :
- nettoyage ou abrasion, avant collage, de la surface à coller d'au moins un des substrats S1 et/ou S2,
- mise sous presse de l'ensemble des substrats S1 et S2 à chaud à une température supérieure à la température de fusion de la composition, et/ou
- mise sous presse de l'ensemble des substrats S1 et S2 à froid à une température inférieure à la température de fusion de la composition.

20. Procédé selon l'une quelconque des revendications 8 à 18, **caractérisé en ce qu'**il n'utilise pas de solvant.

21. Produit stratifié comprenant un substrat S1 élastomère à base d'acrylonitrile, et une composition conforme à l'une quelconque des revendications 1 à 7 adhérant à S1.

22. Produit stratifié comprenant un premier substrat S1 à base d'acrylonitrile, et un second substrat S2 adhérant à S1 au moyen d'une composition selon l'une quelconque des revendications 1 à 7.

23. Utilisation d'une composition selon l'une quelconque des revendications 1 à 7, comme promoteur d'adhérence de substrat(s) S1 élastomère(s) à base d'acrylonitrile, ledit promoteur d'adhérence comprenant de 50 à 100% molaire de fonctions amides tertiaires, sur le nombre de mol total de fonctions amides du promoteur.

24. Utilisation selon la revendication 23, dans laquelle le promoteur d'adhérence forme une colle thermofusible prête à l'emploi.

25. Utilisation selon la revendication 23, dans laquelle le promoteur d'adhérence est incorporé directement dans la composition du substrat S1.

26. Article élastomère à base d'acrylonitrile, **caractérisé en ce qu'**il comporte de 5 à 95% en poids de composition selon l'une quelconque des revendications 1 à 7, sur le poids de l'article.

## Patentansprüche

1. Polyamidzusammensetzung zum Heißkleben auf ein Elastomersubstrat auf Acrylnitril-Basis, **dadurch gekennzeichnet, dass** sie 10 bis 100 Mol-% tertiäre Amidfunktionen, bezogen auf die Gesamtanzahl der Mole an Amidfunktionen der Zusammensetzung, umfasst.

2. Zusammensetzung nach Anspruch 1, wobei die tertiären Amidfunktionen aus mindestens einer aliphatischen und/oder cycloaliphatischen Verbindung mit sekundärer Aminfunktion stammen.

3. Zusammensetzung nach Anspruch 1 oder 2, wobei die aliphatische und/oder cycloaliphatische Verbindung mit sekundärer Aminfunktion aus Piperazin (Pip), Piperidin, Pyrrolidin, Aminoethylpiperazin (AEP), N-Heptyl-11-aminoundecansäure, 1,3-Di-(4-piperidyl)propan, 1,2-Di-(4-piperidyl)ethan und deren Gemischen ausgewählt ist.

4. Zusammensetzung nach einem der Ansprüche 1 bis 3, die 10 bis 100 Mol-% mindestens eines Monomers, ausgewählt aus: Pip.9, Pip.10, Pip.12, Pip.14, Pip.18, Pip.36, AEP.6, AEP.9, AEP.10, AEP.12, AEP.14, AEP.18, AEP.36 und deren Gemischen, bezogen auf die Gesamtanzahl der Mole an Polyamid der Zusammensetzung, umfasst.

5. Zusammensetzung nach einem der vorhergehenden Ansprüche, **dadurch gekennzeichnet, dass** sie mindestens ein Copolyamid umfasst, ausgewählt aus: PA Pip.9/Pip.12/11, PA 6/Pip.12/12, PA 6.10/Pip.10/Pip.12, PA Pip.12/12, PA Pip.10/12, PA Pip.10/11/Pip.9 und deren Gemischen.

6. Zusammensetzung nach einem der vorhergehenden Ansprüche, **dadurch gekennzeichnet, dass** sie außerdem mindestens eines der folgenden Monomere: 4.6, 4.T, 5.4, 5.9, 5.10, 5.12, 5.13, 5.14, 5.16, 5.18, 5.36, 6, 6.4, 6.9, 6.10, 6.12, 6.13, 6.14, 6.16, 6.18, 6.36, 6 .T, 9, 10.4, 10.9, 10.10, 10.12, 10.13, 10.14, 10.16, 10.18, 10.36, 10.T, 11, 12, 12.4, 12.9, 12.10, 12.12, 12.13, 12.14, 12.16, 12.18, 12.36, 12.T und deren Gemische, in Form von Compoundierung oder Copolyamid enthält.

7. Zusammensetzung nach einem der vorhergehenden Ansprüche, **dadurch gekennzeichnet, dass** sie in Form einer Folie, von Pulver, Filamenten, eines Gittergewebes oder einer Vliesbahn, von Granulat, eines geformten Gegenstands und Mischungen dieser Formen vorliegt.

8. Klebeverfahren auf ein Elastomersubstrat S1 auf Acrylnitril-Basis, **dadurch gekennzeichnet, dass** es die Verwendung einer Zusammensetzung nach einem der vorhergehenden Ansprüche umfasst.

9. Verfahren nach Anspruch 8, wobei das Elastomersubstrat S1 auf Acrylnitril-Basis mindestens ein Butadien-Acrylnitril-Copolymer (NBR) umfasst.

10. Verfahren nach einem der Ansprüche 8 oder 9, wobei das Substrat S1 außerdem mindestens ein anderes Elastomer ohne Acrylnitril umfasst.

11. Verfahren nach einem der Ansprüche 8 bis 10, wobei das Substrat S1 außerdem mindestens einen der folgenden Bestandteile umfasst: Pulver, Füllstoff, Weichmacher, Vernetzungsmittel, Vulkanisierungsaktivator, Vulkanisierungsbeschleuniger.

12. Verfahren nach einem der Ansprüche 8 bis 11, wobei das Substrat S1 außerdem 5 bis 95 Gew.-% der Zusammensetzung nach einem der Ansprüche 1 bis 6, bezogen auf das Gesamtgewicht von S1, umfasst.

13. Verfahren nach einem der Ansprüche 8 bis 12, **dadurch gekennzeichnet, dass** es mindestens eine der folgenden Umwandlungen umfasst, die an dem Substrat S1 und/oder an der Polyamidzusammensetzung durchgeführt wird/werden: Heißsiegeln, Extrudieren, Beschichten, Einspritzen, Formen, Thermoformen, Kalandrieren und/oder Pressen.

14. Verfahren nach einem der Ansprüche 8 bis 13 zum Zusammenfügen zweier Substrate S1 und S2, **dadurch gekennzeichnet, dass** es die folgenden Schritte umfasst:
- Auftragen der Zusammensetzung in flüssiger Form auf eine Oberfläche mindestens eines der beiden Substrate,
- Zusammenlegen der Oberflächen der zusammenzufügenden Substrate,
- Abkühlen oder Trocknenlassen des aus dem Zusammenlegen resultierenden Verbunds, um ein Schichtprodukt zu erhalten, in dem die 2 Substrate S1 und S2 aneinander haften.

15. Verfahren nach einem der Ansprüche 8 bis 13 zum Zusammenfügen zweier Substrate S1 und S2, **dadurch gekennzeichnet, dass** es die folgenden Schritte umfasst:
- Einbringen der Zusammensetzung im festen Zustand zwischen die beiden zusammenzufügenden Substrate S1 und S2,
- Erhitzen mindestens der Grenzfläche zwischen den in Kontakt gehaltenen S1 und S2 auf eine Temperatur nahe der Schmelztemperatur der Zusammensetzung, um die Zusammensetzung zu schmelzen,
- Abkühlen, um ein Schichtprodukt zu erhalten, in dem die 2 Substrate S1 und S2 aneinander haften.

16. Verfahren nach Anspruch 12 zum Zusammenfügen zweier Substrate S1 und S2, **dadurch gekennzeichnet, dass** es die folgenden Schritte umfasst:
- Zusammenlegen der Oberflächen der zusammenzufügenden Substrate S1 und S2,
- Erhitzen mindestens der so zwischen den zwei Substraten S1 und S2 gebildeten Kontaktzone auf eine Temperatur nahe dem Schmelzpunkt des Substrats S1,
- Abkühlen mindestens der Kontaktzone, um ein Schichtprodukt zu erhalten, in dem die 2 Substrate S1 und S2 aneinander haften.

17. Verfahren nach einem der Ansprüche 8 bis 15, wobei das Material des Substrats S1 und das Material des Substrats S2 von der gleichen Art sind.

18. Verfahren nach einem der Ansprüche 8 bis 16, wobei das Material des Substrats S1 und das Material des Substrats S2 unterschiedlicher Art sind, wobei S2 aus thermoplastischen Polymeren, thermoplastischen Elastomerpolymeren (TPE), Homopolymeren und Copolymeren, wie Polyamiden, Polyaminen, Polyestern, Polyethern, Polyetherestern, Polyimiden, Polycarbonaten, PVC, Phenolharzen, vernetzten oder nicht vernetzten Polyurethanen, Poly(EthylenVinylacetat), natürlichen Elastomeren oder synthetischen Elastomeren; natürlichen oder synthetischen Fasern, Glasfasern oder Kohlenstofffasern und aus diesen Fasern hergestellten Textil- und Gewebematerialien sowie Metall, Leder, Papier und Pappe, funktionalisierten polaren Substraten und deren Gemischen ausgewählt ist.

19. Verfahren nach einem der Ansprüche 8 bis 18, das außerdem mindestens einen der folgenden Schritte umfasst:
- Reinigen oder Abschleifen der zu verklebenden Oberfläche mindestens eines der Substrate S1 und/oder S2 vor dem Verkleben,
- Pressen des Verbundes der Substrate S1 und S2 im Heißen bei einer Temperatur oberhalb des Schmelzpunkts der Zusammensetzung und/oder
- Pressen des Verbundes der Substrate S1 und S2 im Kalten bei einer Temperatur unterhalb bei der Schmelztemperatur der Zusammensetzung.

20. Verfahren nach einem der Ansprüche 8 bis 18, **dadurch gekennzeichnet, dass** es kein Lösungsmittel verwendet.

21. Schichtprodukt, das ein Elastomersubstrat S1 auf Acrylnitril-Basis und eine Zusammensetzung nach einem der Ansprüche 1 bis 7, die an S1 haftet, umfasst.

22. Schichtprodukt, umfassend ein erstes Substrat S1 auf Acrylnitril-Basis und ein zweites Substrat S2, das an S1 mithilfe einer Zusammensetzung nach einem der Ansprüche 1 bis 7 haftet.

23. Verwendung einer Zusammensetzung nach einem der Ansprüche 1 bis 7 als Haftvermittler eines Elastomersubstrats bzw. von Elastomersubstraten S1 auf Acrylnitril-Basis, wobei der Haftvermittler 50 bis 100% Mol-% tertiäre Amidfunktionen, bezogen auf die Gesamtanzahl der Mole an Amidfunktionen des Vermittlers, umfasst.

24. Verwendung nach Anspruch 23, wobei der Haftvermittler einen gebrauchsfertigen Heißschmelzklebstoff bildet.

25. Verwendung nach Anspruch 23, wobei der Haftvermittler direkt in die Zusammensetzung des Substrats S1 eingebracht wird.

26. Elastomerer Gegenstand auf Acrylnitril-Basis, **dadurch gekennzeichnet, dass** er 5 bis 95 Gew.-% der Zusammensetzung nach einem der Ansprüche 1 bis 7, bezogen auf das Gewicht des Gegenstands, enthält.

## Claims

1. Polyamide composition that is thermally adhesive to an acrylonitrile-based elastomeric substrate, **characterized in that** it comprises from 10 mol% to 100 mol% of tertiary amide functions relative to the total number of moles of amide functions in the composition.

2. Composition according to Claim 1, in which the tertiary amide functions are derived from at least one aliphatic and/or cycloaliphatic compound bearing a secondary amine function.

3. Composition according to Claim 1 or 2, in which the aliphatic and/or cycloaliphatic compound bearing a secondary amine function is chosen from piperazine (Pip), piperadine, pyrrolidine, aminoethylpiperazine (AEP), N-heptyl-11-aminoundecanoic acid, 1,3-bis(4-piperidyl)propane, 1,2-bis(4-piperidyl)ethane, and mixtures thereof.

4. Composition according to one of Claims 1 to 3, comprising from 10 mol% to 100 mol% of at least one monomer chosen from: Pip.9, Pip.10, Pip.12, Pip.14, Pip.18, Pip.36, AEP.6, AEP.9, AEP.10, AEP.12, AEP.14, AEP.18, AEP.36, and mixtures thereof, relative to the total number of moles of polyamide in the composition.

5. Composition according to any one of the preceding claims, **characterized in that** it comprises at least one copolyamide chosen from: PA Pip.9/Pip.12/11, PA 6/Pip.12/12, PA 6.10/Pip.10/Pip.12, PA Pip.12/12, PA Pip.10/12, PA Pip.10/11/Pip.9, and mixtures thereof.

6. Composition according to any one of the preceding claims, **characterized in that** it also comprises at least one of the following monomers: 4.6, 4.T, 5.4, 5.9, 5.10, 5.12, 5.13, 5.14, 5.16, 5.18, 5.36, 6, 6.4, 6.9, 6.10, 6.12, 6.13, 6.14, 6.16, 6.18, 6.36, 6 .T, 9, 10.4, 10.9, 10.10, 10.12, 10.13, 10.14, 10.16, 10.18, 10.36, 10.T, 11, 12, 12.4, 12.9, 12.10, 12.12, 12.13, 12.14, 12.16, 12.18, 12.36, 12.T, and mixtures thereof in alloy or copolyamide form.

7. Composition according to any one of the preceding claims, **characterized in that** it is in the form of a film, a powder, filaments, a woven grille or nonwoven web, granules, or a molded object, and mixtures of these forms.

8. Process for adhering to an acrylonitrile-based elastomeric substrate S1, **characterized in that** it comprises the use of a composition in accordance with any one of the preceding claims.

9. Process according to Claim 8, in which said acrylonitrile-based elastomeric substrate S1 comprises at least one butadiene-acrylonitrile copolymer (NBR).

10. Process according to either of Claims 8 and 9, in which said substrate S1 also comprises at least one other acrylonitrile-free elastomer.

11. Process according to any one of Claims 8 to 10, in which said substrate S1 also comprises at least one of the following ingredients: pulverulent, filler, plasticizer, crosslinking agent, vulcanization activator, vulcanization accelerator.

12. Process according to any one of Claims 8 to 11, in which said substrate S1 also comprises from 5% to 95% by weight of composition in accordance with any one of claims 1 to 6, relative to the total weight of S1.

13. Process according to any one of Claims 8 to 12, **characterized in that** it comprises at least one of the following transformations performed on substrate S1 and/or on the polyamide composition: hot bonding, extrusion, coating, injection-molding, molding, thermoforming, calendering and/or pressing.

14. Process according to any one of Claims 8 to 13, for assembling two substrates S1 and S2, **characterized in that** it comprises the following steps:
- applying said composition in liquid form to a surface of at least one of the two substrates,
- bearing the surfaces of the substrates to be assembled against each other,
- cooling or allowing to dry the assembly resulting from the bearing together so as to obtain a laminated product in which the two substrates S1 and S2 adhere to each other.

15. Process according to any one of Claims 8 to 13, for assembling two substrates S1 and S2, **characterized in that** it comprises the following steps:
- placing said composition in solid form between the two substrates S1 and S2 to be assembled,
- heating to a temperature close to the melting point of the composition, at least the interface between S1 and S2 maintained in contact, to melt the composition,
- cooling so as to obtain a laminated product in which the two substrates S1 and S2 adhere together.

16. Process according to Claim 12, for assembling two substrates S1 and S2, **characterized in that** it comprises the following steps:
- bearing the surfaces of the substrates S1 and S2 to be assembled against each other,
- heating to a temperature close to the melting point of substrate S1 at least the region of contact thus formed between the two substrates S1 and S2,
- cooling at least said region of contact so as to obtain a laminated product in which the two substrates S1 and S2 adhere to each other.

17. Process according to any one of claims 8 to 15, in which the material of substrate S1 and the material of substrate S2 are of the same nature.

18. Process according to any one of Claims 8 to 16, in which the material of substrate S1 and the material of substrate S2 are of different nature, S2 being chosen from thermoplastic polymers, elastomeric thermoplastic polymers (ETP), homopolymers and copolymers, such as polyamides, polyamines, polyesters, polyethers, polyetheresters, polyimides, polycarbonates, PVC, phenolic resins, crosslinked or noncrosslinked polyurethanes, poly(ethylene-vinyl acetate), natural elastomers, or synthetic elastomers; natural or synthetic fibers; glass fibers or carbon fibers; and textile and woven materials made from these fibers; and also metal, leather, paper and cardboard; functionalized polar substrates, and mixtures thereof.

19. Process according to any one of Claims 8 to 18, also comprising at least one of the following steps:
- cleaning or abrasion, before bonding, of the surface to be bonded of at least one of the substrates S1 and/or S2,
- pressing all of the substrates S1 and S2 with heat at a temperature above the melting point of the composition, and/or
- pressing all of the substrates S1 and S2 without heat at a temperature below the melting point of the composition.

20. Process according to any one of Claims 8 to 18, **characterized in that** it does not use any solvent.

21. Laminated product comprising an acrylonitrile-based elastomeric substrate S1, and a composition in accordance with any one of Claims 1 to 7 adhering to S1.

22. Laminated product comprising a first acrylonitrile-based substrate S1, and a second substrate S2 adhering to S1 by means of a composition according to any one of Claims 1 to 7.

23. Use of a composition according to any one of Claims 1 to 7, as an adhesion promoter for acrylonitrile-based elastomeric substrate(s) S1, said adhesion promoter comprising from 50 mol% to 100 mol% of tertiary amide functions relative to the total number of moles of amide functions in the promoter.

24. Use according to claim 23, in which the adhesion promoter forms a ready-to-use hot-melt adhesive.

25. Use according to Claim 23, in which the adhesion promoter is directly incorporated into the composition of substrate S1.

26. Acrylonitrile-based elastomeric article, **characterized in that** it comprises from 5% to 95% by weight of composition according to any one of Claims 1 to 7, relative to the weight of the article.
